# EUROPEAN PATENT APPLICATION

(11) **EP 4 375 905 A1**
(43) Date of publication of application: **29.05.2024**
(21) Application number: 23210899.3
(22) Date of filing: 20.11.2023
(51) Int. Cl.: G06Q 20/20, G07G 1/00, G07G 3/00

(54) **APPARATUS AND METHOD FOR DETECTING NUMBER OF ARTICLES AND ELECTRONIC DEVICE**

(30) Priority: 25.11.2022 CN 202211488522
(71) Applicant: Fujitsu Limited, Kawasaki-shi, Kanagawa 211-8588 (JP)
(72) Inventor: ZHU, Xiantan, Beijing, 100022 (CN); TAN, Zhiming, Beijing, 100022 (CN)
(74) Representative: Hoffmann Eitle

(57) **Abstract**

Embodiments of this disclosure provide an apparatus and method for detecting the number of articles and an electronic device. The apparatus for detecting the number of articles includes: a detecting device configured to detect the number of articles in a shopping container according to an image of articles in the shopping container; a classifying device configured to classify the image of the articles in the shopping container by using a classifier, and obtain a classification weight corresponding to a classification result; and a calculating device configured to calculate a prediction value of the number of the articles in the shopping container based on the number of the articles in the shopping container detected by the detecting device and the classification weight. In this disclosure, the number of the articles in the shopping container is calculated by using the number of the articles detected according to the image and the classification weight. Hence, the number of the articles in the shopping container may be accurately detected at a relatively low cost.

## Description

### Technical Field

This disclosure relates to the field of image detection technologies.

### Background

It is very simple and convenient for customers in self-checkout at a dedicated checkout counter, which may reduce the number of store staff and reduce operating costs.

In order to avoid errors in calculating the number of articles in a self-checkout process, some techniques for confirming the number of articles have emerged. For example, in some techniques, detecting devices may read information on radio frequency identification (RFID) tags set in the articles to detect such information as the number and prices of the articles; for another example, in other techniques, a computer vision processing device is used to determine whether a shopping basket is empty or full of articles, and evaluate a possibility of incorrect calculation of articles.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary of the Disclosure

The above techniques used to confirm the number of articles have some limitations. For example, in detecting the number of articles based on the information on RFID tags, it is necessary to install an RFID tag for each article, which is costly and labor-intensive; and the technique of using a computer vision processing device may only determine whether a shopping basket is empty or full, and cannot accurately detect the number of articles in the shopping basket.

In order to solve at least one of the above problems, embodiments of this disclosure provide an apparatus and method for detecting the number of articles and an electronic device, so that the number of the articles in a shopping container may be accurately detected at a relatively low cost.

According to an aspect of the embodiments of this disclosure, there is provided an apparatus for detecting the number of articles, the apparatus for detecting the number of articles including:
a detecting device configured to detect the number of articles in a shopping container according to an image of articles in the shopping container;
a classifying device configured to classify the image of the articles in the shopping container by using a classifier, and obtain a classification weight corresponding to a classification result; and
a calculating device configured to calculate a prediction value of the number of the articles in the shopping container based on the number of the articles in the shopping container detected by the detecting device and the classification weight.

According to another aspect of the embodiments of this disclosure, there is provided a method for detecting the number of articles, the method for detecting the number of articles including:
detecting the number of articles in a shopping container according to an image of articles in the shopping container;
classifying the image of the articles in the shopping container by using a classifier, and obtaining a classification weight corresponding to a classification result; and
calculating a prediction value of the number of the articles in the shopping container based on the detected number of the articles in the shopping container and the classification weight.

According to a further aspect of the embodiments of this disclosure, there is provided an electronic device, including a memory and a processor, the memory storing a computer program, and the processor being configured to execute the computer program to carry out the method for detecting the number of articles described above.

An advantage of the embodiments of this disclosure exists in that the number of the articles in the shopping container is calculated by using the number of the articles detected according to the image and the classification weights. Hence, the number of the articles in the shopping container may be accurately detected at a relatively low cost.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

### Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of an apparatus for detecting the number of articles of an embodiment of this disclosure;
FIG. 2 is a schematic diagram of an application scenario of an apparatus for detecting the number of articles of the embodiment of this disclosure;
FIG. 3 is a schematic diagram of images of articles in a shopping container;
FIG. 4 is a schematic diagram of a correspondence between a threshold and a prediction value;
FIG. 5 is a schematic diagram of a method for detecting the number of articles; and
FIG. 6 is a schematic diagram of an electronic device of an embodiment of this disclosure.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

Features that are described and/or illustrated with respect to one embodiment may be used in the same way or in a similar way in one or more other embodiments and/or in combination with or instead of the features of the other embodiments. The term "comprises/comprising" when used in this specification is taken to specify the presence of stated features, integers, steps or components but does not preclude the presence or addition of one or more other features, integers, steps, components or groups thereof.

### Embodiment of a first aspect

The embodiment of this disclosure provides an apparatus for detecting the number of articles.

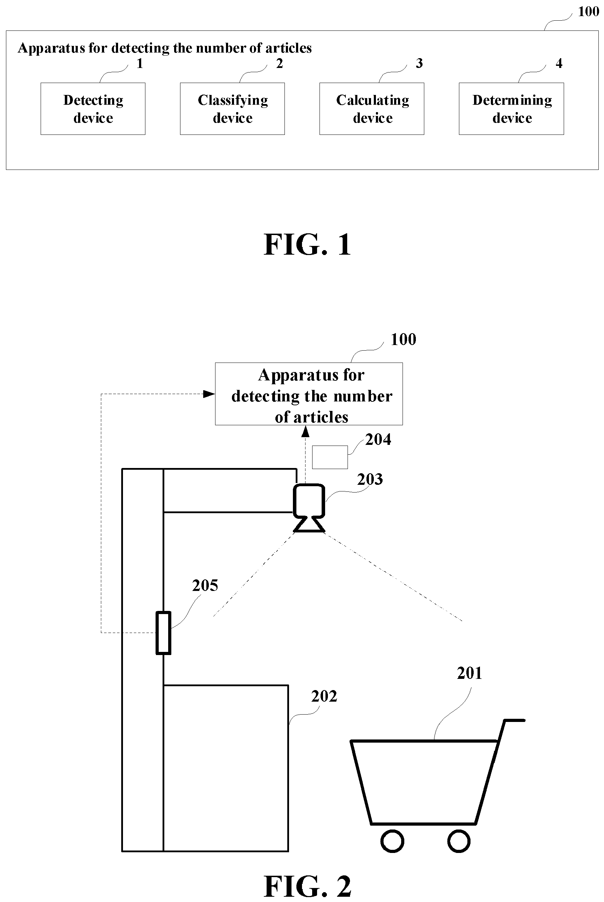

FIG. 1 is schematic diagram of the apparatus for detecting the number of articles of the embodiment of this disclosure. As shown in FIG. 1, an apparatus 100 for detecting the number of articles includes a detecting device 1, a classifying device 2 and a calculating device 3.

In the embodiment of this disclosure, the detecting device 1 detects the number of articles in a shopping container according to an image of articles in the shopping container, the classifying device 2 classifies the image of the articles in the shopping container by using a classifier, and obtains a classification weights corresponding to a classification result, and the calculating device 3 calculates the number of the articles in the shopping container based on the number of the articles in the shopping container detected by the detecting device 1 and the classification weight obtained by the classifying device 2, thereby obtaining a prediction value of the number of the articles in the shopping container.

According to the embodiment of the first aspect of this disclosure, the number of the articles in the shopping container is calculated by using the number of the articles detected according to the image and the classification weight. Hence, the number of the articles in the shopping container may be accurately detected at a relatively low cost.

In at least one embodiment, the apparatus 100 for detecting the number of articles is applicable to such sites as stores. FIG. 2 is a schematic diagram of an application scenario of an apparatus for detecting the number of articles of this disclosure.

As shown in FIG. 2, the shopping container may be a container for holding articles, such as a shopping basket or a shopping cart. The shopping container 201 in FIG. 2 is a shopping basket.

In at least one embodiment, the image of the article(s) in the shopping container may be an image obtained by shooting the article(s) in the shopping container by a camera which may be set in the shopping container or outside of the shopping container, such as at a cashier in a store, or other locations. The camera may shoot the articles in the shopping container from above to obtain the image.

For example, as shown in FIG. 2, the camera 203 is located near a cashier 202, and may capture an image of articles in a shopping container 201 from above, thereby obtaining an image 204 of the articles in the shopping container.

The apparatus 100 for detecting the number of articles may obtain the image 204 of the articles in the shopping container based on the camera 203, thereby detecting the number of the articles in the shopping container 201.

In at least one embodiment, the detecting device 1 may detect the image 204 by using a detection model , thereby obtaining the number detect_num of articles in the shopping container. The detection model used by the detecting device 1 may be based on an object detection algorithm, which may be a deep learning algorithm, such as a YOLO (You Only Look Once) algorithm, and furthermore, it may also be other algorithms.

In at least one example, the detection model may be trained by using images as training samples, so as to obtain a trained detection model, and the detecting device 1 detects the image 204 by using the trained model.

In at least one embodiment, an intersection over union (IOU) of the detecting device 1 for article detection may be greater than 0.5, i.e. IoU > 0.5, wherein the intersection over union refers to a ratio of an intersection of a border of the article detected by the detecting device 1 and an actual border of the article to a union of the border of the article detected by detecting device 1 and the actual border of the article. A precision of article detection by the detecting device 1 may be 0.8, and a recall rate may be 0.8.

In at least one embodiment, the classifying device 2 may classify the image 204 by using a classifier, so as to obtain a classification weight wi corresponding to the classification result.

The classification result of the classifying device 2 may correspond to an extent to which a bottom of the shopping container is covered by the articles in the image 204. The classification result may include at least two categories. For example, the classification result may include a first category, a second category, and a third category.

The first category may correspond to a state in which the bottom of the shopping container is covered by a small amount of articles; for example, if an area covered by the articles is less than 1/2 of an area of the bottom of the shopping container, this state may be deemed as a state in which the shopping container is almost empty. The second category may correspond to a state in which the bottom of the shopping container is covered by more articles; for example, if an area covered by the articles is greater than 1/2 of the area of the bottom of the shopping container and less than 2/3 of the area of the bottom of the shopping container, this state may be deemed as that the shopping container is nearly half full. The third category may correspond to a state in which the bottom of the shopping container is covered by a large number of articles; for example, if an area covered by the articles is greater than 2/3 of the area of the bottom of the shopping container, this state may be deemed as that the shopping container is nearly full.

In at least one embodiment, the classifier used by the classifying device 2 may be obtained by training by using labeled training sample images. For example, according to the area of the bottom of the shopping container covered by the articles in the training sample images, the training sample images may be labeled as the first category, or the second category, or the third category. In particular, if the area of the bottom of the shopping container covered by the articles in the training sample images is less than 1/2 of the area of the bottom of the shopping container, the training sample images may be labeled as the first category; if the area of the bottom of the shopping container covered by the articles in the training sample images is greater than 1/2 of the area of the bottom of the shopping container and less than 2/3 of the area of the bottom of the shopping container, the training sample images may be labeled as the second category; and if the area of the bottom of the shopping container covered by the articles in the training sample images is greater than 2/3 of the area of the bottom of the shopping container, the training sample images may be labeled as the third category. Furthermore, if the articles in the shopping container are exposed to edges of the shopping container in the training sample images (for example, the images of the articles in the shopping container overlap with the edges of the shopping container), the training sample images may also be labeled as the third category.

It should be noted that the first, second and third categories above are only examples only, and the classification results may also have four or more categories.

In at least one embodiment, the classifier used by the classifying device 2 may have a network structure of a residual network (such as Resnet 50).

In at least one embodiment, the classifying device 2 may obtain a classification weight wi corresponding to the classification result. For example, the classifying device 2 may obtain the classification weight wi according to a mapping relationship between the classification result and the classification weight, and different classification results may correspond to different classification weights wi. In a specific example, a classification weight wi to which the first category corresponds may be equal to 1.33, a classification weight wi to which the second category corresponds may be equal to 2.21, and a classification weight wi to which the third category corresponds may be equal to 3.64.

The classification weights wi to which the classification results correspond may be used to denote, in the training sample images to which the classification results correspond, a ratio of an actual number of articles in the shopping container to the number of articles detected by the detecting device 1.

The classification weight wi to which each classification result corresponds may be obtained by calculating in a manner as follows: adding up actual numbers of articles in the shopping container in a predetermined number of training sample images to which the classification results correspond to obtain a sum sum_gt of the actual numbers, adding up the number of articles detected by the detecting device 1 for the predetermined number of training sample images to obtain a sum sum_detection of detected numbers, and dividing the sum sum_gt of the actual numbers by the sum sum_detection of detected numbers to obtain the classification weight wi, i.e. wi = sum_gt/sum_detection.

In this application, the calculating device 3 calculates the prediction value predict_num of the number of articles in the shopping container in the images 204, based on the number detect_num of articles in the shopping container detected by the detecting device 1 and the classification weight wi obtained by the classifying device 2 for the images 204. For example, the prediction value predict_num may be equal to a product of the number detect_num of articles detected in the shopping container and the classification weight wi, i.e. predict_num = detect_num*wi.

Therefore, the computing device 3 may accurately calculate the number of articles in the shopping container according to the images of the articles in the shopping container, and the cost is relatively low.

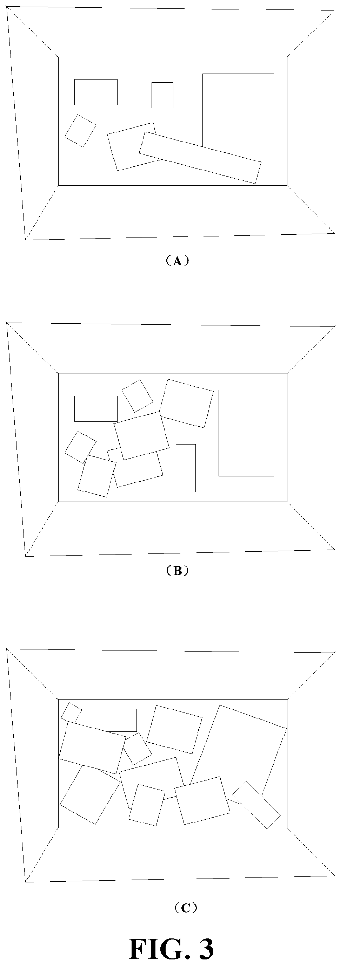

FIG. 3 is a schematic diagram of the images of the articles in the shopping container.

For example, for the image shown in (A) of FIG. 3, the number detect_num of articles detected by the detecting device 1 detects is 6, the classification result of the classifying device 2 is the first category, and a corresponding classification weight wi of 1.33, hence, the prediction value calculated by the device 3 is predict_num = detect_num*wi = 6* 1.33 = 8.

For another example, for the image shown in (B) of FIG. 3, the number detect_num of articles detected by the detecting device 1 detects is 9, the classification result of the classifying device 2 is the second category, and a corresponding classification weight wi of 2.21, hence, the prediction value calculated by the device 3 is predict_num = detect_num*wi = 9*2.21 = 20.

For a further example, for the image shown in (C) of FIG. 3, the number detect_num of articles detected by the detecting device 1 detects is 11, the classification result of the classifying device 2 is the third category, and a corresponding classification weight wi of 3.64, hence, the prediction value calculated by the device 3 is predict_num = detect_num*wi = 11*3.64 = 40.

As shown in FIG. 1, the apparatus 100 for detecting the number of articles may further include a determining device 4.

The determining device 4 determines a difference Error between the prediction value predict_num of the number of articles in the shopping container calculated by the calculating device 3 and a scanning value scanning _num, i.e. Error = predict_num - scanning _num.

The scanning value scanning _num is the number of the articles obtained by the scanning device by scanning the articles in the shopping container. For example, as shown in FIG. 2, the scanning device 205 may be set near the cashier 202. The scanning device 205 may scan barcodes, or two-dimensional codes, or magnetic fields on the articles to obtain information on the number of articles and/or information on prices.

In at least one embodiment, the determining device 4 may further compare the difference Error with a threshold Th, and generate alarm information when the difference Error is greater than or equal to the threshold Th.

For example, when a customer checks out at the cashier 202, the articles may be taken out from the shopping container and scanned one by one on the scanning device 205 to proceed with checkout; after scanning, the number of articles obtained by the scanning device 205 is the scanning value scanning_ num, the calculating device 3 calculates the prediction value predict_num of the number of the articles based on the images of the articles in the shopping container, the determining device 4 calculates the difference Error between the prediction value predict_num and the scanning value scanning_num, and generates alarm information when the difference Error is greater than or equal to the threshold Th; and when a worker receives the alarm message, the number of articles in the shopping container may be manually verified. Hence, a situation where the articles in shopping container are missed in scanning may be avoided.

In at least one embodiment, the threshold Th used by the determining device 4 may be set according to an interval where the prediction value value _num is located. For example, the larger the prediction value predict_num is, the larger the threshold Th is.

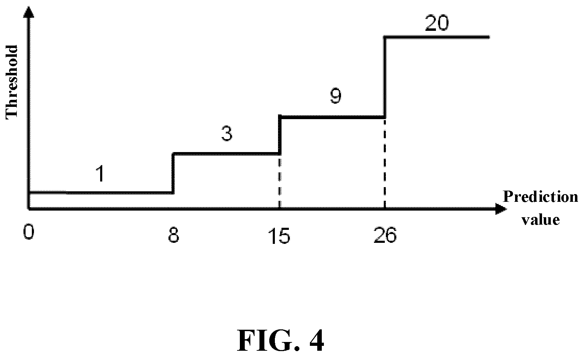

FIG. 4 is a schematic diagram of a correspondence between the threshold and the prediction value. As shown in FIG. 4, different thresholds Th may correspond to a range of different prediction values predict _num, that is, the thresholds Th may change in stepped shapes relative to the prediction values predict_num. For example, the range of the prediction values predict _num is (0, 8], and the threshold Th is 1; the range of the prediction values predict_num is (8, 15], and the threshold Th is 3; the range of prediction value predict _num is (15, 26], and the threshold Th is 9; the range of the prediction value predict_num is greater than 26, and the threshold Th is 20.

It should be noted that the components or modules related to this disclosure are only described above. However, this disclosure is not limited thereto, and the apparatus 100 for detecting the number of articles may further include other components or modules, and reference may be made to related techniques for particulars of these components or modules.

Furthermore, for the sake of simplicity, connection relationships between the components or modules or signal profiles thereof are only illustrated in FIG. 24. However, it should be understood by those skilled in the art that such related techniques as bus connection, etc., may be adopted. And the above components or modules may be implemented by hardware, such as a processor, and a memory, etc., which are not limited in the embodiment of this disclosure.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

### Embodiment of a second aspect

The embodiment of this disclosure provides a method for detecting the number of articles, corresponding to the apparatus for detecting the number of articles in the embodiment of the first aspect, with contents identical to those in the embodiment of the first aspect being not going to be described herein any further.

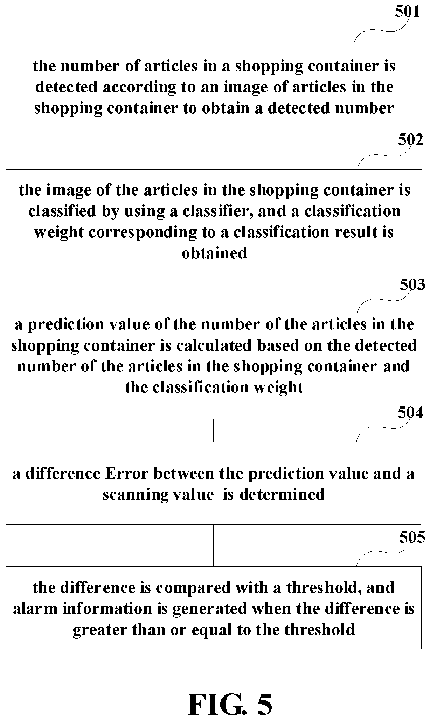

FIG. 5 is a schematic diagram of the method for detecting the number of articles. As shown in FIG. 5, the method includes:
operation 501: the number of articles in a shopping container is detected according to an image of articles in the shopping container to obtain a detected number detect _num;
operation 502: the image of the articles in the shopping container is classified by using a classifier, and a classification weight wi corresponding to a classification result is obtained; and
operation 503: a prediction value predict_num of the number of the articles in the shopping container is calculated based on the detected number of the articles in the shopping container and the classification weight.

In operation 503, the detected number detect_num may be multiplied by the classification weight wi to obtain the prediction value predict_num.

According to operations 501, 502 and 503, the number of the articles in the shopping container may be accurately detected at a relatively low cost.

As shown in FIG. 5, the method for detecting the number of articles may further include:
operation 504: a difference Error between the prediction value predict_num and a scanning value scanning _num is determined.

In operation 504, the scanning value is the number of articles obtained by a scanning device by scanning the articles in the shopping container.

As shown in FIG. 5, the method for detecting the number of articles may further include:
operation 505: the difference Error is compared with a threshold Th, and alarm information is generated when the difference is greater than or equal to the threshold.

The threshold Th used in operation 505 may be set according to an interval of the prediction value value_num. For example, the larger the prediction value predict _num is, the larger the threshold Th is.

The steps or processes related to this disclosure described above only. However, this disclosure is not limited thereto, and the method for detecting the number of articles may also include other steps or processes, and reference may be made to the prior art for specific contents of these steps or processes. In addition, the embodiment of this disclosure is exemplarily described by taking some structures of the models used in the method for detecting the number of articles as examples. However, this disclosure is not limited to these structures, appropriate modifications may be made to these structures, and implementations of these modifications shall be included within the scope of the embodiments of this disclosure.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that according to the method for detecting the number of articles of this disclosure, the number of the articles in the shopping container is calculated by using the number of the articles detected according to the image and the classification weight. Hence, the number of the articles in the shopping container may be accurately detected at a relatively low cost.

### Embodiment of a third aspect

The embodiment of this disclosure provides an electronic device, including the apparatus 100 for detecting the number of articles as described in the embodiment of the first aspect, contents of which being incorporated herein. The electronic device is for example, a computer, a server, a working station, a laptop computer, and a smart mobile phone; however, the embodiment of this disclosure is not limited thereto.

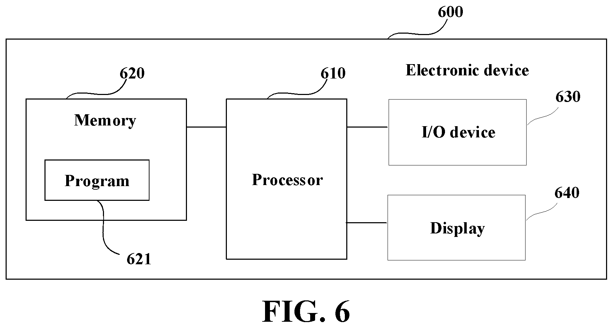

FIG. 6 is a schematic diagram of the electronic device of the embodiment of this disclosure. As shown in FIG. 6, an electronic device 600 may include a processor (such as a central processing unit (CPU)) 610 and a memory 620, the memory 620 being coupled to the CPU 610. The memory 620 may store various data, and furthermore, it may store a program 621 for information processing, and execute the program 621 under control of the processor 610.

In some embodiments, the functions of the apparatus 100 for detecting the number of articles may be integrated into the processor 610. The processor 610 is configured to carry out the method for detecting the number of articles as described in the embodiment of the second aspect.

In some embodiments, the apparatus 100 for detecting the number of articles and the processor 610 may be configured separately; for example, the apparatus for detecting the number of articles may be configured as a chip connected to the processor 610, and the functions of the apparatus for detecting the number of articles are executed under control of the processor 610.

For example, the processor 610 is configured to perform the following control: detecting the number of articles in a shopping container according to an image of articles in the shopping container; classifying the image of the articles in the shopping container by using a classifier, and obtaining a classification weight corresponding to a classification result; and calculating a prediction value of the number of the articles in the shopping container based on the detected number of the articles in the shopping container and the classification weight.

In at least some embodiments, the method for detecting the number of articles further includes: determining a difference between the prediction value and a scanning value, wherein the scanning value is the number of articles obtained by a scanning device by scanning the articles in the shopping container. In at least some embodiments, the method for detecting the number of articles further includes:
comparing the difference with a threshold Th, and generating alarm information when the difference is greater than or equal to the threshold.

In at least some embodiments, the threshold is set according to a range where the prediction value is located.

In at least some embodiments, the larger the prediction value is, the larger the threshold is.

In at least some embodiments, according to an extent to which a bottom of the shopping container is covered by the articles in the image, the classification result may be divided into at least two categories.

In at least some embodiments, the detected number of the articles in the shopping container is multiplied by the classification weight wi to obtain the prediction value of the articles in the shopping container.

Furthermore, as shown in FIG. 6, the electronic device 600 may further include an input/output (I/O) device 630, and a display 640, etc., wherein, functions of the above components are similar to those in the prior art, and shall not be described herein any further. It should be noted that the electronic device 600 does not necessarily include all the parts shown in FIG. 6, and furthermore, the electronic device 600 may include parts not shown in FIG. 6, and the prior art may be referred to.

An embodiment of this disclosure provides a computer readable program, which, when executed in an electronic device, causes a computer to carry out the method for detecting the number of articles as described in the embodiment of the second aspect in the electronic device.

An embodiment of this disclosure provides a computer storage medium, including a computer readable program, which causes a computer to carry out the method for detecting the number of articles as described in the embodiment of the second aspect in an electronic device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The method/apparatus described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

This disclosure further provides the following supplements.
1. A method for detecting the number of articles, including:
   detecting the number of articles in a shopping container according to an image of articles in the shopping container;
   classifying the image of the articles in the shopping container by using a classifier, and obtaining a classification weight corresponding to a classification result; and
   calculating a prediction value of the number of the articles in the shopping container based on the number of the articles detected in the shopping container and the classification weight.
2. The method for detecting the number of articles according to supplement 1, wherein the method for detecting the number of articles further includes:
   determining a difference between the prediction value and a scanning value,
   wherein the scanning value is the number of articles obtained by a scanning device by scanning the articles in the shopping container.
3. The method for detecting the number of articles according to supplement 2, wherein,
   the method for detecting the number of articles further includes:
   comparing the difference with a threshold, and generating alarm information when the difference is greater than or equal to the threshold.
4. The method for detecting the number of articles according to supplement 3, wherein,
   the threshold is set according to an interval where the prediction value is located.
5. The method for detecting the number of articles according to supplement 4, wherein,
   the larger the prediction value is, the larger the threshold is.
6. The method for detecting the number of articles according to supplement 1, wherein,
   the classification result is divided into at least two categories according to an extent to which a bottom of the shopping container is covered by the articles in the image.
7. The method for detecting the number of articles according to supplement 1, wherein,
   the detected number of articles in the shopping container is multiplied by the classification weight to obtain a prediction value of the number of articles in the shopping container.
8. A storage medium storing a computer readable program, wherein the computer readable program causes a processor coupled to the storage medium to execute the following method:
   detecting the number of articles in a shopping container according to an image of articles in the shopping container;
   classifying the image of the articles in the shopping container by using a classifier, and obtaining a classification weight corresponding to a classification result; and
   calculating a prediction value of the number of the articles in the shopping container based on the number of the articles detected in the shopping container and the classification weight.
9. The storage medium according to supplement 8, wherein the method for detecting the number of articles further includes:
   determining a difference between the prediction value and a scanning value,
   wherein the scanning value is the number of articles obtained by a scanning device by scanning the articles in the shopping container.
10. The storage medium according to supplement 9, wherein,
   the method for detecting the number of articles further includes:
   comparing the difference with a threshold, and generating alarm information when the difference is greater than or equal to the threshold.
11. The storage medium according to supplement 10, wherein,
   the threshold is set according to an interval where the prediction value is located.
12. The storage medium according to supplement 11, wherein,
   the larger the prediction value is, the larger the threshold is.
13. The storage medium according to supplement 8, wherein,
   according to an extent to which a bottom of the shopping container is covered by the articles in the image, the classification result may be divided into at least two categories.
14. The storage medium according to supplement 8, wherein,
   the detected number of the articles in the shopping container is multiplied by the classification weight to obtain the prediction value of the articles in the shopping container.

## Claims

1. An apparatus for detecting the number of articles, **characterized in that** the apparatus for detecting the number of articles comprises:
a detecting device configured to detect the number of articles in a shopping container according to an image of the articles in the shopping container;
a classifying device configured to classify the image of the articles in the shopping container by using a classifier, and obtain a classification weight corresponding to a classification result; and
a calculating device configured to calculate a prediction value of the number of the articles in the shopping container based on the number of the articles in the shopping container detected by the detecting device and the classification weight.

2. The apparatus for detecting the number of articles according to claim 1, wherein the apparatus for detecting the number of articles further comprises:
a determining device configured to determine a difference between the prediction value and a scanning value,
wherein the scanning value is the number of the articles obtained by scanning the articles in the shopping container by a scanning device.

3. The apparatus for detecting the number of articles according to claim 2, wherein,
the determining device further compares the difference with a threshold, and generates alarm information when the difference is greater than or equal to the threshold.

4. The apparatus for detecting the number of articles according to claim 3, wherein,
the threshold is set according to a range where the prediction value is located.

5. The apparatus for detecting the number of articles according to claim 4, wherein,
the larger the prediction value is, the larger the threshold is.

6. The apparatus for detecting the number of articles according to claim 1, wherein,
the classifying device divides the classification result into at least two categories according to an extent to which a bottom of the shopping container is covered by the articles in the image.

7. The apparatus for detecting the number of articles according to claim 1, wherein,
the calculating device multiplies the detected number of the articles in the shopping container by the classification weight to obtain the prediction value of the number of the articles in the shopping container.

8. An electronic device, comprising the apparatus for detecting the number of articles as claimed in any one of claims 1-7.

9. A method for detecting the number of articles, **characterized in that** the method for detecting the number of articles comprises:
detecting the number of articles in a shopping container according to an image of the articles in the shopping container;
classifying the image of the articles in the shopping container by using a classifier, and obtaining a classification weight corresponding to a classification result; and
calculating a prediction value of the number of the articles in the shopping container based on the detected number of the articles in the shopping container and the classification weight.

10. The method for detecting the number of articles according to claim 9, wherein the method for detecting the number of articles further comprises:
determining a difference between the prediction value and a scanning value,
wherein the scanning value is the number of the articles obtained by scanning the articles in the shopping container by a scanning device.
